# FASCICULE DE BREVET EUROPEEN

(11) **EP 1 488 999 B1**
(45) Date de publication et mention de la délivrance du brevet: **16.08.2006**
(21) Numéro de dépôt: 04102758.2
(22) Date de dépôt: 16.06.2004
(51) Int. Cl.: B64D 29/08, B64C 7/02

(54) **Moteur d'avion dont les capots de soufflante et d'inverseurs de poussée sont séparés par un jeu réduit**
Flugzeugtriebwerkscowling mit verringertem Spaltmass
Aircraft engine cowling with reduced gap

(30) Priorité: 18.06.2003 FR 0350231
(43) Date de publication de la demande: 22.12.2004
(73) Titulaire: AIRBUS France, 31060 Toulouse (FR)
(72) Inventeur: Porte, Alain, 31770, Colomiers (FR)
(74) Mandataire: Poulin, Gérard

(56) Documents cités:
- EP-A- 0 744 339
- EP-A- 0 898 063
- WO-A-99/30969
- US-A- 5 603 471
- US-B1- 6 340 135

## Description

### DOMAINE TECHNIQUE

L'invention concerne un moteur d'avion comprenant une nacelle comportant successivement, dans le sens de l'écoulement de l'air, une structure d'entrée d'air, des capots de soufflante et des capots d'inverseurs de poussée.

Le moteur d'avion selon l'invention peut être implanté sur tout type d'aéronef et notamment sur les avions de ligne affectés au transport de passagers ou de marchandises.

Dans l'ensemble du texte, les termes tels que "avant", "arrière", etc. se réfèrent au sens de l'écoulement de l'air à l'intérieur du moteur. De façon comparable, le terme "axial" se réfère à une direction parallèle à l'axe du moteur.

### ÉTAT DE LA TECHNIQUE ANTÉRIEURE

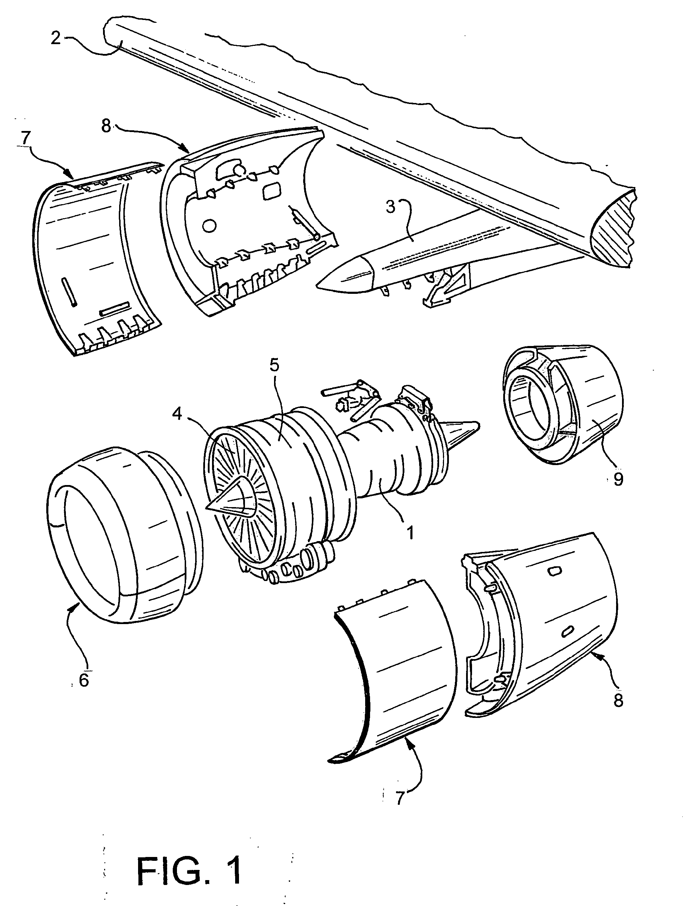

Comme on l'a représenté schématiquement en perspective éclatée sur la figure 1 des dessins annexés, un moteur d'avion classique tel qu'un turboréacteur comprend habituellement un carter moteur 1, suspendu à une aile d'avion 2 par un mât 3 et entouré par une nacelle, de façon à délimiter entre eux un canal annulaire dans lequel est placée une soufflante 4. Autour de la soufflante 4, le canal de soufflante est délimité par un carter de soufflante 5, rendu solidaire du carter moteur 1 par des ailettes (non représentées).

Dans le sens de l'écoulement de l'air, c'est-à-dire d'avant en arrière, la nacelle comprend successivement une structure annulaire d'entrée d'air 6, une paire de capots de soufflante droit et gauche 7, une paire de capots 8 d'inverseur de poussée droit et gauche et une tuyère annulaire 9. Les capots de soufflante 7 sont articulés sur le mât 3 par leurs bords supérieurs et peuvent être ouverts pour permettre la maintenance. En vol, les capots de soufflante 7 sont maintenus fermés par des organes de verrouillage interposés entre leurs bords inférieurs.

Le bord arrière interne de la structure d'entrée d'air 6 est fixé directement sur le bord avant du carter de soufflante 5 par des organes (non représentés) de type boulons ou rivets.

Le bord avant de chacun des capots d'inverseur de poussée 8 est également rendu solidaire du bord arrière du carter de soufflante 5. Lorsque les capots d'inverseur de poussée 8 sont installés, cette fonction est assurée par l'emboîtement d'un ergot circulaire (non représenté) solidaire de chacun des capots d'inverseur de poussée 8 dans une gorge (non représentée) usinée sur le carter de soufflante 5. Lors de la mise en oeuvre des inverseurs de poussée montés dans les capots 8, cet agencement permet de transmettre intégralement au carter de soufflante 5 les efforts axiaux engendrés par la poussée inversée du moteur.

Lorsque les capots de soufflante 7 sont fermés, ils sont rendus solidaires de la structure d'entrée d'air 6. Cette fonction est généralement assurée par des couteaux (non représentés) montés à l'intérieur du bord avant de chacun des capots de soufflante 7, qui viennent se loger sans jeu dans des orifices (non représentés) prévus à l'extrémité arrière de la structure d'entrée d'air 6. Le nombre de couteaux et d'orifices est fonction de la taille du moteur. En variante, les couteaux sont parfois remplacés par un ergot unique formé sur au moins une partie de la circonférence des capots de soufflante 7 et venant se loger dans une gorge circonférentielle prévue sur la structure d'entrée d'air.

Compte tenu des tolérances de fabrication et de montage des différentes pièces, il existe un léger jeu J1 entre les bords arrière des capots de soufflante 7 et les bords avant des capots d'inverseur de poussée et un léger jeu J2 entre le bord arrière de la structure d'entrée d'air 6 et les bords avant des capots de soufflante 7, à la surface extérieure de la nacelle, lorsque les capots de soufflante sont fermés. Ces jeux sont minimisés afin d'éviter une traînée parasite trop importante, préjudiciable du point de vue de la consommation de carburant du moteur.

Lorsque l'avion est en vol, la structure d'entrée d'air 6 est soumise à des différences de pression engendrées par l'écoulement aérodynamique de l'air. Ces différences de pression ont pour effet de soumettre la structure d'entrée d'air à un phénomène de succion, qui tend à l'aspirer vers l'avant par rapport aux autres composants du moteur.

Etant donné que la structure d'entrée d'air 6 et les capots de soufflante 7 sont rendus solidaires par des structures de type couteaux-orifices ou analogues, c'est l'ensemble formé par la structure d'entrée d'air et les capots de soufflante qui se met en flexion et tend à être aspiré vers l'avant. le jeu J2 entre ces pièces reste donc constant et limité. En revanche, le jeu J1 entre les capots de soufflante 7 et les capots 8 d'inverseur de poussée est accentué par cette flexion, du fait qu'il n'existe pas de liaison entre ces capots. Cela augmente la traînée parasite et contribue à dégrader la consommation de carburant tout au long du vol.

De surcroît, les mouvements relatifs engendrés par ce phénomène de succion entraînent une usure accélérée des pièces.

Le document WO-A-99/30969 décrit un moteur d'avion dont les capots de soufflante sont équipés, sur leurs bords inférieurs, de verrous à -crochets. Des dispositifs de guidage sont placés à l'avant et à l'arrière des bords inférieurs des capots. Ces dispositifs coopèrent avec des dispositifs complémentaires prévus sur la structure d'entrée d'air et sur la partie arrière de la nacelle.

Le document EP-A-0 744 339 décrit un moteur d'avion dans lequel le bord arrière du capot comporte un couteau qui vient se loger dans une gorge formée sur un bord adjacent de la nacelle.

Enfin, le document US-A-5 603 471 décrit un moteur d'avion dans lequel le bord arrière des capots coopère avec le bord avant de la buse d'éjection par quatre doigts et deux couteaux.

### EXPOSÉ DE L'INVENTION

L'invention a pour objet un moteur d'avion dont la conception originale lui permet de résoudre au moins en partie les problèmes posés sur les moteurs existants.

Plus précisément, l'invention a pour objet un moteur d'avion dans lequel le jeu entre les capots de soufflante et les capots d'inverseur de poussée reste faible lorsque l'avion est en vol, de façon à limiter la traînée parasite et à ne pas augmenter la consommation de carburant.

Selon l'invention, ce résultat est obtenu au moyen d'un moteur d'avion conforme à la revendication 1.

L'introduction de moyens additionnels de rigidification dans la structure de la nacelle permet de supprimer ou de limiter très fortement les déformations de l'ensemble formé par la structure d'entrée d'air et les capots de soufflante provoquées par le phénomène de succion précité, lorsque l'avion est en vol. Le jeu J1 entre les capots de soufflante et les capots d'inverseur de poussée reste donc faible, malgré l'absence de liaison entre ces pièces. Ainsi, la consommation de carburant n'est pas augmentée par un accroissement de la traînée parasite.

Selon un mode de réalisation de l'invention, les moyens additionnels de rigidification comprennent une pluralité de renforts rigides dont une première extrémité est fixée à la structure d'entrée d'air, à proximité des moyens de transmission d'efforts axiaux, et dont une deuxième extrémité est fixée à la structure d'entrée d'air à proximité de l'endroit où celle-ci est fixée au carter de soufflante. On réalise ainsi un renforcement de la structure d'entrée d'air qui s'oppose à la force de succion tendant à aspirer cette structure vers l'avant.

Les moyens additionnels de rigidification peuvent comprendre des éléments complémentaires formés respectivement sur un bord avant du capot d'inverseur de poussée et sur un bord arrière du capot de soufflante, lesdits éléments complémentaires étant aptes à s'emboîter l'un dans l'autre, avec un faible jeu axial prédéterminé, dans la position fermée du capot de soufflante, pour assurer la transmission d'efforts axiaux après rattrapage dudit jeu. Après rattrapage du jeu existant entre lesdits éléments complémentaires, pour tenir compte des tolérances de fabrication, cet agencement permet d'assurer une liaison rigide entre les capots de soufflante et les capots d'inverseur de poussée, ladite liaison rigide s'opposant à la force de succion qui tend à aspirer la structure d'entrée d'air vers l'avant.

Dans ce mode de réalisation, les éléments complémentaires comprennent avantageusement une pluralité d'orifices formés sur le bord avant du capot d'inverseur de poussée et une pluralité d'ergots formés sur le bord arrière du capot de soufflante, de façon à pénétrer dans lesdits orifices dans la position fermée du capot de soufflante, les orifices et les ergots étant répartis sur la périphérie du moteur.

Dans ce mode de réalisation, les éléments complémentaires peuvent aussi comprendre une gorge circonférentielle formée sur le bord avant du capot d'inverseur de poussée et un ergot formé sur au moins une partie de la circonférence du bord arrière du capot de soufflante, de façon à pénétrer dans ladite gorge circonférentielle dans la position fermée du capot de soufflante.

### BRÈVE DESCRIPTION DES DESSINS

On décrira à présent, à titre d'exemples non limitatifs, différents modes de réalisation préférés de l'invention, en se référant aux dessins annexés, dans lesquels :
- la figure 1, déjà décrite, est une vue en perspective éclatée qui représente un moteur d'avion de l'art antérieur ;
- la figure 2 est une vue en coupe à plus grande échelle de la zone de jonction entre la structure d'entrée d'air et l'un des capots de soufflante de la nacelle d'un moteur d'avion, selon un premier mode de réalisation de l'invention ; et
- la figure 3 est une vue en coupe à plus grande échelle de la zone de jonction entre l'un des capots de soufflante et le capot d'inverseur de poussée adjacent, selon un deuxième mode de réalisation de l'invention.

### EXPOSÉ DÉTAILLÉ DE MODES DE RÉALISATION PRÉFÉRÉS

Le moteur conforme à l'invention est semblable à celui qui a été décrit précédemment en se référant à la figure 1. On se reportera donc à la description faite en référence à cette figure pour connaître les principaux éléments constitutifs du moteur et leur agencement relatif.

Pour l'essentiel, on rappelle que le moteur comprend une partie centrale délimitée extérieurement par un carter moteur 1 et une nacelle entourant le carter moteur. La partie centrale du moteur est séparée de la nacelle par un canal de soufflante dans lequel est placée une soufflante 4. Un carter de soufflante 5 entoure la soufflante et est fixé rigidement au carter moteur 1. D'avant en arrière, la nacelle comprend une structure d'entrée d'air 6, fixée à l'extrémité avant du carter de soufflante 5, deux capots de soufflante 7 articulés sur le mât 3 et entourant le carter de soufflante 5, deux capots 8 d'inverseur de poussée solidaires de l'extrémité arrière du carter de soufflante 5 et une tuyère annulaire 9.

Pour permettre la maintenance, les capots de soufflante 7 peuvent être basculés vers le haut dans une position ouverte. Lorsque l'avion est opérationnel, les capots de soufflante 7 sont fermés et leurs bords inférieurs sont reliés entre eux par des moyens de verrouillage.

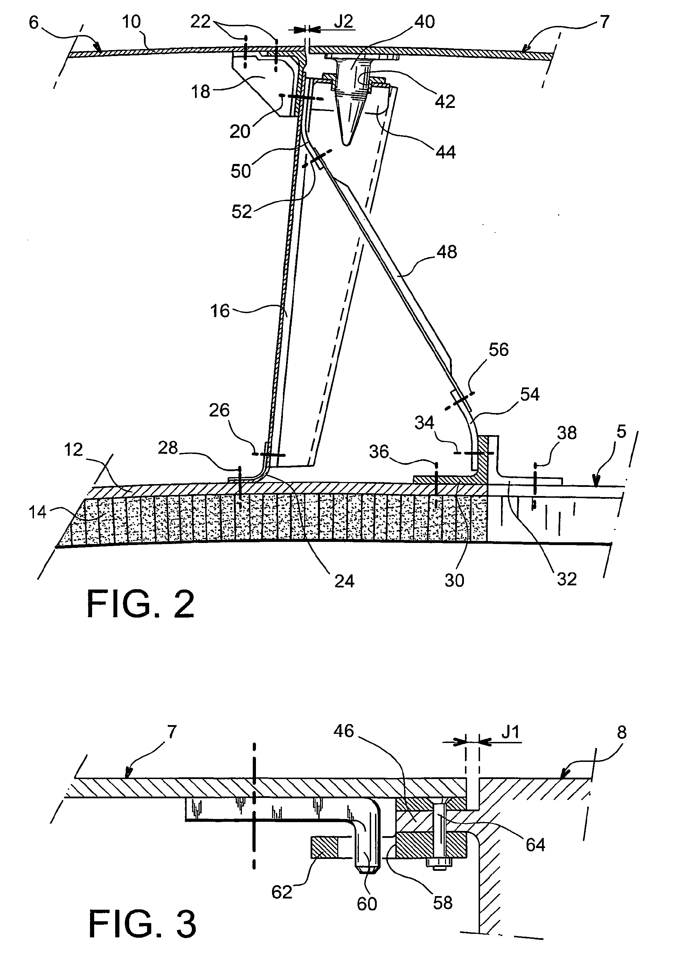

Comme l'illustre plus en détail la figure 2, la structure d'entrée d'air 6 comprend une enveloppe extérieure 10, une enveloppe intérieure 12 munie d'une structure anti bruit 14 et des raidisseurs 16 reliant entre elles les enveloppes 10 et 12, au niveau de l'extrémité arrière de l'enveloppe extérieure 10.

Plus précisément, une première extrémité de chacun des raidisseurs 16 est fixée à l'enveloppe extérieure 10 par une équerre 18 et des organes de fixation tels que des rivets ou des boulons illustrés schématiquement par les traits mixtes 20 et 22.

La deuxième extrémité de chacun des raidisseurs 16 est fixée à l'enveloppe intérieure 12 par une équerre 24 et des organes de fixation tels que des rivets ou des boulons illustrés schématiquement par les traits mixtes 26 et 28.

Les raidisseurs 16 sont agencés de façon telle que leurs extrémités sont situées dans un même plan sensiblement perpendiculaire à l'axe longitudinal du moteur.

Comme l'illustre également la figure 2, l'enveloppe intérieure 12 de la structure d'entrée d'air 6, munie de sa structure anti bruit 14, fait saillie vers l'arrière au-delà des raidisseurs 16. L'extrémité arrière de ladite enveloppe intérieure 12 est fixée à l'extrémité avant du carter de soufflante 5, par exemple par des équerres 30 et 32 et des organes de fixation tels que des rivets ou des boulons illustrés schématiquement par les traits mixtes 34, 36 et 38.

Comme l'illustre plus précisément la figure 2, lorsqu'ils occupent leur position fermée, les capots de soufflante 7 sont rendus solidaires de la structure d'entrée d'air 6 par exemple par des couteaux 40 qui viennent se loger sans jeu dans des orifices 42 prévus à l'extrémité arrière de la structure d'entrée d'air 6. Les orifices 42 sont formés dans des pièces 44 qui sont fixées sur le bord arrière de la structure d'entrée d'air 6, à proximité de l'enveloppe extérieure de celle-ci. Cette fixation peut notamment être assurée par les moyens de fixation 20 servant à fixer les raidisseurs 16 sur les équerres 18.

Selon une variante de réalisation non représentée et conformément à un agencement connu, les capots de soufflante 7 peuvent aussi être rendus solidaires de la structure d'entrée d'air 6 en prévoyant une gorge circonférentielle sur le bord arrière de la structure d'entrée d'air 6, à proximité de l'enveloppe extérieure de celle-ci, et un ergot sur le bord avant de chacun des capots de soufflante 7, au moins sur une partie de leur circonférence. Lorsque les capots de soufflante sont fermés, l'ergot pénètre sans jeu dans la gorge circonférentielle, de façon à solidariser lesdits capots 7 de la structure d'entrée d'air 6.

A leur extrémité arrière (voir la figure 3), les capots de soufflante viennent prendre appui sur des parties avant 46 des capots d'inverseur de poussée 8, lorsque lesdits capots de soufflante sont fermés.

Selon l'agencement connu qui vient d'être décrit, et qui peut subir différentes variantes sans sortir du cadre de l'invention, il existe un jeu J1 entre les bords adjacents des capots de soufflante 7 et des capots d'inverseur de poussée 8 et un jeu J2 entre les bords adjacents de la structure d'entrée d'air 6 et des capots de soufflante 7, à la périphérie extérieure de la nacelle. Ces jeux J1 et J2, qui ont pour origine les tolérances de fabrication et de montage, sont limités à des valeurs très faibles afin d'éviter la formation d'une traînée parasite préjudiciable du point de vue de la consommation de carburant.

Dans cet agencement classique, la structure d'entrée d'air 6 se déforme vers l'avant, dans sa partie extérieure, sous l'effet des différences de pression engendrées par l'écoulement aérodynamique de l'air lorsque l'avion est en vol. Sous l'effet de cette déformation, les capots de soufflante 7 sont entraînés vers l'avant par la liaison sans jeu assurée par les couteaux 40 et les orifices 42. Le jeu J2 reste donc constant et très faible. En revanche, le jeu J1 augmente, ce qui a pour effet d'accroître la traînée aérodynamique et, par conséquent, la consommation de carburant sur les moteurs existants.

Conformément à l'invention, des moyens additionnels de rigidification sont intégrés dans la nacelle, afin d'augmenter de façon très sensible la rigidité de l'ensemble formé par la structure d'entrée d'air 6 et les capots de soufflante 7.

Dans le mode de réalisation illustré sur la figure 2, ces moyens additionnels de rigidification comprennent une pluralité de renforts rigides dont l'un est représenté en 48 sur la figure 2. Chacun des renforts rigides se présente sous la forme d'une barre 48 sensiblement rectiligne, disposée dans un plan passant par l'axe longitudinal du moteur.

Une première extrémité de chacune des barres 48 est fixée à la structure d'entrée d'air 6, à proximité des moyens de transmission d'efforts axiaux entre ladite structure d'entrée d'air et les capots de soufflante 7, matérialisés ici par les couteaux 40 et les orifices 42. Cette fixation est assurée par des équerres 50 et des moyens de fixation tels que des rivets ou des boulons, symbolisés par les traits mixtes 20 et 52 sur la figure 2, où l'équerre est fixée sur le raidisseur 16 par les moyens de fixation 20 servant également à la fixation de l'équerre 18 et de la pièce 44.

En variante, lorsque les raidisseurs 16 sont de grande dimension, la première extrémité de chacun des renforts rigides 48 peut aussi être fixée sensiblement au milieu de la longueur des raidisseurs 16. Cet agencement permet de limiter les vibrations des raidisseurs en vol et, par conséquent, l'usure des éléments en présence.

La deuxième extrémité de chacun des renforts rigides 48 est fixée à la structure d'entrée d'air 6, à proximité de l'endroit où ladite structure est fixée au carter de soufflante 5. Cette fixation est assurée par une autre équerre 54 et par des moyens de fixation tels que des rivets ou des boulons, symbolisés par les traits mixtes 34 et 56 sur la figure 2, où l'équerre 54 est fixée aux équerres 30 et 32 par les moyens de fixation reliant celles-ci l'une à l'autre.

Selon cet agencement, la deuxième extrémité de chacun des renforts rigides 48 est décalée vers l'arrière et vers l'intérieur du moteur par rapport à sa première extrémité. En outre, les renforts rigides 48 relient l'arrière de la partie périphérique extérieure de la structure d'entrée d'air 6 à l'arrière de la partie périphérique intérieure de ladite structure, dans sa zone de fixation sur le carter de soufflante 5, c'est-à-dire sur une partie rigide du moteur. Ainsi, les renforts rigides 48 reprennent les efforts qui tendent à déplacer vers l'avant la partie périphérique extérieure de la structure d'entrée d'air 6, par rapport au reste du moteur, lorsque l'avion est en vol.

En s'opposant au déplacement vers l'avant de la partie périphérique extérieure de la structure d'entrée d'air 6, les renforts rigides 48 font pratiquement disparaître tout mouvement relatif entre les capots de soufflante 7 et les capots d'inverseur de poussée 8, puisque les capots de soufflante 7 sont rendus solidaires de la structure d'entrée d'air par les moyens de transmission d'efforts axiaux matérialisés par les couteaux 40 et les orifices 42. On évite ainsi un agrandissement du jeu J1 entre les capots de soufflante 7 et les capots d'inverseur de poussée 8. Par conséquent, la consommation de carburant du moteur peut être maintenue à une valeur minimale.

Le nombre des renforts rigides 48 dépend des efforts à reprendre. Les renforts rigides 48 sont répartis régulièrement sur toute la périphérie de la nacelle.

Selon un mode de réalisation illustré plus précisément sur la figure 3, les moyens additionnels de rigidification comprennent des éléments complémentaires 58, 60 formés respectivement sur les bords avant des capots d'inverseur de poussée 8 et sur les bords arrière des capots de soufflante 7.

De façon plus précise, ces éléments complémentaires 58 et 60 sont agencés de façon à s'emboîter l'un dans l'autre, avec un faible jeu axial prédéterminé, lorsque les capots de soufflante 6 sont fermés. La présence d'un faible jeu axial entre ces éléments complémentaires est rendue nécessaire par les tolérances de fabrication et de montage, compte tenu du fait que les capots de soufflante 7 sont rendus solidaires de la structure d'entrée d'air 6 à leurs extrémités avant. Les éléments complémentaires 58 et 60 assurent ainsi, dans le sens axial, une liaison rigide entre les capots de soufflante 7 et les capots d'inverseur de poussée 8, lorsque le faible jeu axial qui existe initialement entre ces éléments a été rattrapé.

Dans le mode de réalisation représenté plus précisément sur la figure 3, les éléments complémentaires précités comprennent une pluralité d'orifices 58 formés dans une pièce 62 fixée sur la partie avant 46 de chacun des capots 7 d'inverseur de poussée, par des moyens de fixation 64 tels que des rivets ou des boulons. Ces éléments complémentaires comprennent aussi une pluralité d'ergots 60, qui sont fixés sur le bord arrière de chacun des capots de soufflante 7, par des moyens de fixation 62 tels que des rivets ou des boulons, de façon à pénétrer dans les orifices 58 lorsque les capots de soufflante sont fermés, en ménageant entre eux le jeu axial précité.

Dans une variante de réalisation non représentée, les ergots 60 sont remplacés par un ergot unique formé sur au moins une partie de la circonférence du bord arrière de chaque capot de soufflante et les orifices multiples 58 sont remplacés par une gorge circonférentielle formée sur le bord avant de chaque capot d'inverseur de poussée.

Ceci permet de maintenir pratiquement constant le jeu J1 entre les capots 8 d'inverseur de poussée et l'ensemble formé par la structure d'entrée d'air 6 et les capots de soufflante 7. Par conséquent, la consommation de carburant est maintenue à une valeur minimale malgré les différences de pression appliquées en vol sur la structure d'entrée d'air 6, du fait de l'écoulement aérodynamique de l'air.

## Revendications

1. Moteur d'avion comprenant un carter de soufflante (5), et une nacelle comportant successivement, dans le sens de l'écoulement de l'air, une structure d'entrée d'air (6) fixée au carter de soufflante (5), au moins un capot de soufflante (7) apte à occuper une position ouverte et une position fermée et au moins un capot (8) d'inverseur de poussée fixé au carter de soufflante (5), un bord avant du capot de soufflante (7) étant en prise sur un bord arrière de la structure d'entrée d'air (6) par des moyens (40, 42) de transmission d'efforts axiaux, dans ladite position fermée, **caractérisé en ce que** la structure d'entrée d'air (6) comprend une enveloppe extérieure (10), une enveloppe intérieure (12) et des raidisseurs (16) reliant entre elles les enveloppes extérieure (10) et intérieure (12), des moyens additionnels de rigidification (48 ; 58, 60) étant placés dans la structure d'entrée d'air (6), lesdits moyens additionnels de rigidification comprenant une pluralité de renforts rigides (48) dont une première extrémité est fixée aux raidisseurs (16), à leur extrémité fixée à l'enveloppe extérieure (10) et à proximité des moyens de transmission d'efforts axiaux ou sensiblement au milieu de leur longueur, et dont une deuxième extrémité est fixée à l'enveloppe intérieure (12) à proximité de l'endroit où celle-ci est fixée au carter de soufflante (5).

2. Moteur d'avion selon la revendication 1, dans lequel des moyens additionnels de rigidification comprennent des éléments complémentaires (58, 60) formés respectivement sur un bord avant du capot (8) d'inverseur de poussée et sur un bord arrière du capot de soufflante (7), lesdits éléments complémentaires (58, 60) étant aptes à s'emboîter l'un dans l'autre, avec un faible jeu axial prédéterminé, dans la position fermée du capot de soufflante (7), pour assurer la transmission d'efforts axiaux après rattrapage dudit jeu.

3. Moteur d'avion selon la revendication 2, dans lequel les éléments complémentaires comprennent une pluralité d'orifices (58) formés sur le bord avant du capot (8) d'inverseur de poussée et une pluralité d'ergots (60) formés sur le bord arrière du capot de soufflante (7), de façon à pénétrer dans lesdits orifices (58) dans la position fermée du capot de soufflante (7), les orifices (58) et les ergots (60) étant répartis sur la périphérie du moteur.

4. Moteur d'avion selon la revendication 2, dans lequel les éléments complémentaires comprennent une gorge circonférentielle formée sur le bord avant du capot (8) d'inverseur de poussée et un ergot formé sur au moins une partie de la circonférence du bord arrière du capot de soufflante (7), de façon à pénétrer dans ladite gorge circonférentielle dans la position fermée du capot de soufflante (7).

## Claims

1. Aircraft engine comprising a fan casing (5) and a pod comprising, in sequence along the air flow direction, an air inlet structure (6) fixed to the fan casing (5), at least one fan cowl (7) that can be in an open position and in a closed position and at least one thrust inverter cowl (8) fixed to the fan casing (5), a front edge of the fan cowl (7) being attached to a back edge of the air inlet structure (6) using axial force transmission means (40, 42) when in the said closed position, **characterized in that** the air inlet structure (6) comprises an outer enclosure (10), an inner enclosure (12) and stiffeners (16) interconnecting the outer (10) and inner (12) enclosures, additional rigidification means (48, 58, 60) being place in the air inlet structure (6), said additional rigidification means comprising a plurality of rigid reinforcements (48), whereof a first end is fixed to the stiffeners (16) in the vicinity of the axial force transmission means at the end thereof fixed to the outer enclosure (10) or substantially in the centre of the length and whereof a second end is fixed to the inner enclosure (12) in the vicinity of the point where it is fixed to the fan casing (5).

2. Aircraft engine according to claim 1, wherein additional rigidification means comprise complementary elements (58, 60) respectively formed on a front edge of the thrust inverter cowl (8) and on a rear edge of the fan cowl (7), said complementary elements (58, 60) being fittable into one another with a limited predetermined axial clearance, in the closed position of the fan cowl (7), in order to ensure the transmission of axial forces after taking up said clearance.

3. Aircraft engine according to claim 2, wherein the complementary elements comprise several orifices (58) formed on the front edge of the thrust inverter cowl (8) and several studs (60) formed on the back edge of the fan cowl (7), so as to penetrate into the said orifices (58) when the fan cowl is in the closed position (7), the orifices (58) and the studs (60) being distributed around the periphery of the engine.

4. Aircraft engine according to claim 2, wherein the complementary elements comprise a circumferential groove formed on the front edge of the thrust inverter cowl (8) and a stud formed on at least part of the circumference of the back edge of the fan cowl (7), so as to penetrate into the said circumferential groove when the fan cowl is in the closed position (7).

## Patentansprüche

1. Flugzeug-Triebwerk mit einem Gebläsegehäuse (5) und einer Triebwerkverkleidung, die der Reihe nach in der Strömungsrichtung der Luft eine Lufteintrittsstruktur (6), die an dem Gebläsegehäuse (5) befestigt ist, mindestens eine Gebläsehaube(7), die eine geöffnete und eine geschlossene Position einnehmen kann, und mindestens eine Haube (8) eines Schubumkehrteils, die an dem Gebläsegehäuse (5) befestigt ist, aufweist, wobei eine Vorderkante der Gebläsehaube (7) mit einer Hinterkante der Lufteintrittsstruktur (6) über Mittel (40,42) zur Übertragung von Axialkräften in der geschlossenen Position in Eingriff steht, **dadurch gekennzeichnet, dass** die Lufteintrittsstruktur (6) eine äußere Ummantelung (10), eine innere Ummantelung (12) sowie Versteifungsteile (16) umfasst, welche die äußere Ummantelung (10) und die innere Ummantelung (12) miteinander verbinden, wobei zusätzliche Versteifungsmittel (48;58,60) an/in der Lufteintrittsstruktur (6) angeordnet sind und die zusätzlichen Versteifungsmittel mehrere starre Verstärkungsteile (48) umfassen, von denen ein erstes Ende an den Versteifungsteilen (16) an ihrem an der äußeren Ummantelung (10) befestigten Ende und in Nähe der axialen Kraftübertragungsmittel oder im wesentlichen in der Mitte ihrer Länge befestigt ist, und deren zweites Ende an der inneren Ummantelung (12) in Nähe der Stelle befestigt ist, an der diese an dem Gebläsegehäuse (5) befestigt ist.

2. Flugzeug-Triebwerk nach Anspruch 1, wobei zusätzliche Versteifungsmittel, komplementäre Elemente (58,60) umfassen, die jeweils an einer Vorderkante der Haube (8) des Schubumkehrteils und an einer Hinterkante der Gebläsehaube (7) ausgebildet sind, wobei die komplementären Elemente (58,60) mit einem vorbestimmten geringen Axialspiel in der geschlossenen Position der Gebläsehaube (7) ineinandergreifen können, um die Übertragung von Axialkräften nach Ausgleich des Spiels sicherzustellen.

3. Flugzeug-Triebwerk nach Anspruch 2, wobei die komplementären Elemente mehrere Öffnungen (58) umfassen, die an der Vorderkante der Haube (8) des Schubumkehrteils ausgebildet sind, sowie mehrere Zapfen (60), die an der Hinterkante der Gebläsehaube (7) so ausgebildet sind, dass sie in die Öffnungen (58) in der geschlossenen Position der Gebläsehaube (7) eingeführt werden können, wobei die Öffnungen (58) und die Zapfen (60) an dem Umfang des Triebwerks verteilt sind.

4. Flugzeug-Triebwerk nach Anspruch 2, wobei die komplementären Elemente eine Umfangsrille bzw. -nut umfassen, die an der Vorderkante der Haube (8) des Schubumkehrteils ausgebildet ist, sowie einen Zapfen, der an mindestens einem Teil des Umfangs der Hinterkante der Gebläsehaube (7) so ausgebildet ist, dass er in die Umfangsrille bzw. -nut in der geschlossenen Position der Gebläsehaube (7) eingeführt werden kann.
